# EUROPÄISCHE PATENTSCHRIFT

(11) **EP 2 036 178 B1**
(45) Veröffentlichungstag und Bekanntmachung des Hinweises auf die Patenterteilung: **09.02.2011**
(21) Anmeldenummer: 07765551.2
(22) Anmeldetag: 21.06.2007
(51) Int. Cl.: H02B 13/045

(54) **LEISTUNGSSCHALTER MIT EINEM GEHÄUSE**
HEAVY-DUTY CIRCUIT BREAKER WITH A HOUSING
DISJONCTEUR DE PUISSANCE MUNI D'UN BOÎTIER

(30) Priorität: 30.06.2006 DE 102006031219
(43) Veröffentlichungstag der Anmeldung: 18.03.2009
(73) Patentinhaber: SIEMENS AKTIENGESELLSCHAFT, 80333 München (DE)
(72) Erfinder: STENZEL, Peter, 14612 Falkensee (DE)
(86) Internationale Anmeldenummer: PCT/EP2007/056216
(87) Internationale Veröffentlichungsnummer: WO 2008/000691

(56) Entgegenhaltungen:
- DE-A1- 10 119 530
- DE-U1- 29 614 799

## Beschreibung

Die vorliegenden Erfindung betrifft einen Leistungsschalter mit einem Gehäuse und einer im Gehäuse angeordneten Kontaktanordnung.

Ein derartiger Schalter ist beispielsweise in DE 101 19 530 A1 offenbart. Der darin beschriebene Hochspannungs-Leistungsschalter weist ein Kapselungsgehäuse auf, welches mit wenigstens zwei Anschlussflanschen versehen ist, über die weitere Kapselungsbausteine mit dem Kapselungsgehäuse verbunden werden können. Durch die Anordnung der Anschlussflansche sind gekapselte Hochspannungs-Leistungsschalter variabel miteinander kombinierbar.

Aufgabe der vorliegenden Erfindung ist es, einen Hochspannungs-Leistungsschalter mit einem Gehäuse zur Verfügung zu stellen, welcher besonders variabel einsetzbar ist.

Diese Aufgabe wird durch einen Leistungsschalter nach Anspruch 1 gelöst. Die abhängigen Ansprüche enthalten vorteilhafte Ausgestaltungen des erfindungsgemäßen Leistungsschalters.

Ein erfindungsgemäßer Leistungsschalter ist mit einem Gehäuse ausgestattet, welches eine Gehäuselängsachse aufweist. In dem Gehäuse ist eine Kontaktanordnung angeordnet, die mit einem ersten durch das Gehäuse geführten elektrischen Leiter und einem zweitem durch das Gehäuse geführten elektrischen Leiter in leitender Verbindung steht. Das Gehäuse weist einen ersten Gehäuseteil und einen zweiten Gehäuseteil auf, wobei der erste elektrische Leiter durch den ersten Gehäuseteil und der zweite elektrische Leiter durch den zweiten Gehäuseteil geführt ist. Die beiden Gehäuseteile sind um die Gehäuselängsachse gegeneinander verdrehbar miteinander verbunden.

Durch ein Verdrehen der beiden Gehäuseteile kann die Orientierung der durch die Gehäuseteile geführten elektrischen Leiter relativ zueinander verändert werden. Dadurch ist das Gehäuse vorteilhaft einsetzbar, da es durch Verdrehen der Gehäuseteile an die geometrischen Gegebenheiten am Aufstellungsort optimal angepasst werden kann. Durch geeignetes Verdrehen kann insbesondere eine platzsparende Anordnung der durch das Gehäuse geführten elektrischen Leiter realisiert werden, insbesondere wenn die durch das Gehäuse hindurchgeführten elektrischen Leiter zu weiteren am Gehäuse angeordneten Gehäuseelemente wie etwa Freiluftdurchführungen führen.

Vorteilhaft weist zudem die Kontaktanordnung wenigstens einen Kontakt und wenigstens einen Gegenkontakt auf, die derart ausgestaltet und relativ zueinander angeordnet sind, dass sie sich um die Gehäuselängsachse gegeneinander verdrehen lassen. Der erste elektrische Leiter ist dann mit dem Kontakt und der zweite elektrische Leiter mit dem Gegenkontakt leitend verbunden. Auf diese Weise kann eine Behinderung der Verdrehung der beiden Gehäusehälften gegeneinander bei einer festen Verbindung der elektrischen Leiter mit dem Kontakt und dem Gegenkontakt vermieden werden. Die feste Verbindung der elektrischen Leiter mit dem Kontakt und dem Gegenkontakt ist insbesondere im Hinblick auf die Zuverlässigkeit des elektrischen Kontaktes zwischen Kontakt bzw. Gegenkontakt und elektrischem Leiter vorteilhaft. Wenn der Kontakt und Gegenkontakt bezüglich der Gehäuselängsachse Rotationssymmetrie aufweisen, etwa Zylindersymmetrie, und der eine den anderen bei einer eine Einschaltstellung repräsentierenden Kontaktstellung wenigstens teilweise konzentrisch umgibt, so ist ein barrierefreies Verdrehen von Kontakt und Gegenkontakt gegeneinander möglich - und damit ein barrierefreies Verdrehen der beiden Gehäuseteile. Dies ermöglicht es insbesondere, die beiden Gehäuseteile um bis zu 360° gegeneinander zu verdrehen, ohne dass die Drehung behindert wird. Insbesondere kann die Kontaktanordnung einen Nennstromkontaktanordnung mit einem Nennstromkontakt, einen Nennstromgegenkontakt sowie eine Lichtbogenkontaktanordnung mit einem. Lichtbogenkontakt und einem Lichtbogengegenkontakt umfassen. Der Nennstromkontakt und der Lichtbogenkontakt zeigen hierbei Rotationssymmetrie bezüglich der Gehäuselängsachse, und der Eine umgibt den Anderen konzentrisch. Entsprechend zeigen der Nennstromgegenkontakt und der Lichtbogengegenkontakt Rotationssymmetrie bezüglich der Gehäuselängsachse, und der Eine umgibt den Anderen konzentrisch.

Die Kontaktanordnung kann insbesondere derart ausgestaltet und angeordnet sein, dass sich ein Kontaktschluss bzw. eine Kontakttrennung durch axiales Verschieben des Kontaktes und/oder des Gegenkontaktes entlang der Gehäuselängsachse herbeiführen lässt.

Anstatt den Kontakt und den Gegenkontakt um die Gehäuselängsachse gegeneinander verdrehbar auszugestalten, ist es auch möglich, dass wenigstens einer der elektrischen Leiter elektrisch derart mit der Kontaktanordnung verbunden ist, dass er bei einer Verdrehung der beiden Gehäuseteile gegeneinander um die Kontaktanordnung herum gedreht werden kann. Der elektrische Kontakt zwischen der Kontaktanordnung und den elektrischen Leitern kann hierbei beispielsweise über Schleifkontakte sichergestellt sein.

Im erfindungsgemäßen Leistungsschalter kann das Gehäuse insbesondere als eine geerdete Metallkapsel ausgebildet sein. Die Kontaktanordnung umfasst in diesem Fall ein Löschsystem zum Löschen eines Lichtbogens. Eine derartige Ausgestaltung ermöglicht es, den erfindungsgemäßen Leistungsschalter als sogenannten "Dead Tank Leistungsschalter" einzusetzen. Damit das Verdrehen der beiden Gehäuseteile gegeneinander durch das Löschsystem nicht behindert wird, kann dieses vorteilhaft eine Rotationssymmetrie bezüglich der Gehäuselängsachse aufweisen und konzentrisch zur Kontaktanordnung angeordnet sein.

Der erfindungsgemäße Leistungsschalter kann als Kapselungsbaustein in einer Bausteinanordnung zur Verteilung elektrischer Energie im Hoch- und Höchstspannungsbereich Verwendung finden, wenn jeder Gehäuseteil wenigstens einen Flansch zum Anflanschen weiterer Gehäuseteile umfasst und der erste elektrische Leiter und der zweite elektrische Leiter jeweils durch einen Flansch geführt sind. An die Flansche können beispielsweise Freiluftdurchführungen angeflanscht werden. Durch Verdrehen der beiden Gehäuseteile relativ zueinander kann eine im Hinblick auf den zur Verfügung stehenden Platz beim Aufstellen des Leistungsschalters platzsparende Anordnung der beiden Freiluftdurchführungen herbeigeführt werden. Wenn die Flansche in einer Umfangsfläche des Gehäuses angeordnet sind, ist es möglich, unterschiedlich lange Freiluftdurchführüngen durch Verdrehen der Gehäuseteile gegeneinander so anzuordnen, dass ihre Hochspannungsanschlüsse, beispielsweise bei horizontal ausgerichteter Gehäuselängsachse, auf der gleichen horizontalen Ebene liegen. Unterschiedliche Längen der Freiluftdurchführungen können sich ergeben, wenn manchen Freiluftdurchführungen weitere Elemente, etwa Trenner/Erder, vorgeschaltet werden.

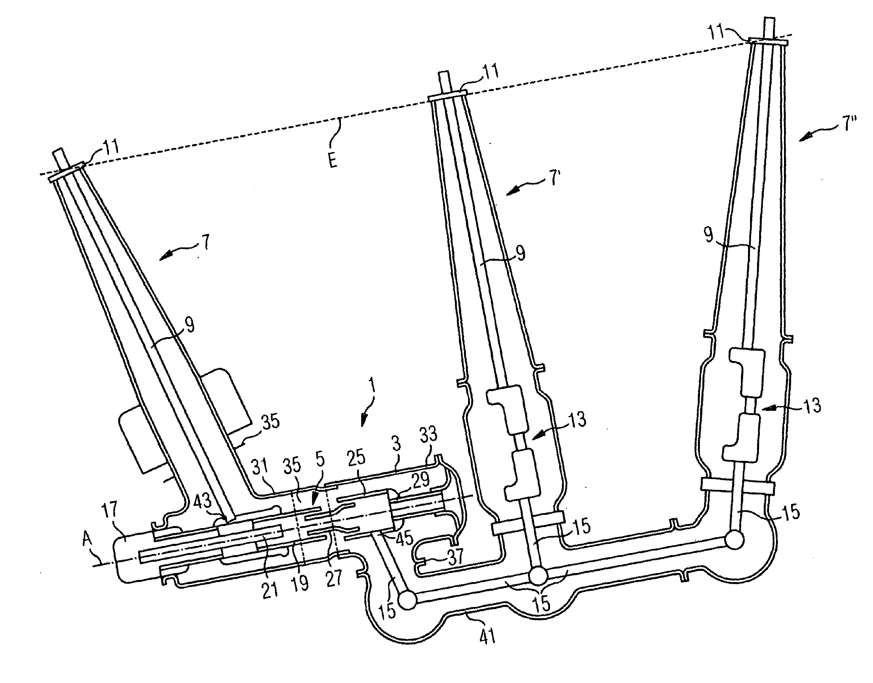

Weitere Merkmale, Eigenschaften und Vorteile der vorliegenden Erfindung ergeben sich aus der nachfolgenden Beschreibung eines Ausführungsbeispiels unter Bezugnahme auf die beiliegende Figur.

Die einzige Figur zeigt eine Bausteinanordnung für Hochspannungsgeräte mit einem erfindungsgemäßen Leistungsschalter.

Die Gehäuseanordnung umfasst einen erfindungsgemäßen Leistungsschalter 1, welcher ein geerdetes metallisches Kapselungsgehäuse 3 mit darin angeordneter Kontaktanordnung 5 aufweist. Die Gehäuseanordnung umfasst als weitere Kapselungsbausteine insbesondere Freiluftdurchführungen 7 und Trenner/Erder 13.

Die Freiluftdurchführungen 7 umfassen halbkonisch ausgebildete Freiluft-Stützisolatoren aus Keramikmaterial oder einem anderen elektrisch isolierenden Material, durch die sich ein Anschlussleiter 9 bis zu einer Anschlussklemmenplatte 11 erstreckt. Der Anschlussleiter 9 ist entweder direkt oder unter Zwischenschaltung eines Trenners/Erders 13 und weiterer Anschlussleiter 15 mit der Kontaktanordnung 5 elektrisch leitend verbunden.

Die Kontaktanordnung 5 ist bezüglich der im vorliegenden Ausführungsbeispiel horizontal ausgerichteten Gehäuselängsachse A des Kopplungsgehäuses 3 rotationssymmetrisch ausgebildet. Sie umfasst einen in Richtung der Gehäuselängsachse A mittels eines Antriebes 17 axial verschiebbaren Längsstromkontakt 19 sowie einen ebenfalls mittels des Antriebs 17 entlang der Gehäuselängsachse A axial verschiebbaren Lichtbogenkontakt 21. Ein Nennstromgegenkontakt 25 sowie ein Lichtbodengegenkontakt 27 sind im Kopplungsgehäuse 3 stationär angeordnet. Durch Verschieben des Lichtbogenkontaktes 21 und des Nennstromkontaktes 19 in Richtung auf den feststehenden Lichtbogengegenkontakt 27 und den feststehenden Nennstromgegenkontakt 25 kann ein Kontaktschluss der Kontaktanordnung 5 herbeigeführt werden. Im Zustand des Kontaktschlusses umgibt der Nennstromgegenkontakt 25 den Nennstromkontakt 19 konzentrisch. Ebenso umgibt der Lichtbogengegenkontakt 27 den Lichtbogenkontakt 21 konzentrisch. Lichtbogenkontakt 21 und Lichtbogengegenkontakt 27 sind zudem konzentrisch innerhalb des Nennstromkontaktes 19 bzw. des Nennstromgegenkontaktes 25 angeordnet. Alle Kontakte und Gegenkontakte sind rotationssymmetrisch bezüglich der Gehäuselängsachse A ausgebildet.

Im Kapselungsgehäuse 3 ist zudem ein Löschsystem 29 angeordnet, über das ein zwischen dem Lichtbogenkontakt 21 und dem Lichtbogengegenkontakt 27 bei einem Ausschaltvorgang entstehender Lichtbogen mit einem Löschgas, beispielsweise Schwefelhexafluorid (SF₆) beblasen wird. Das Löschsystem 29 weist ebenfalls Rotationssymmetrie bezüglich der Gehäuselängsachse A auf.

Das Kapselungsgehäuse 3 weist einen ersten Gehäuseteil 31 und einen zweiten Gehäuseteil 33 auf. Die beiden zylinderförmigen Gehäuseteile 31, 33 sind um die Gehäuselängsachse A gegeneinander verdrehbar ausgebildet. Im vorliegenden Ausführungsbeispiel wird diese dadurch erreicht, dass der erste Gehäuseteil 31 einen in seinem Aussendruchmesser reduzierten Abschnitt 35 aufweist, welcher in dem zweiten Gehäuseteil 33 drehbar eingesetzt ist. Zwischen den beiden Gehäuseteilen 31, 35 ist zudem eine Dichtung vorhanden, welche die Verbindungsstelle gegen den Austritt von unter hohem Druck Löschgas abdichtet.

Sowohl der erste Gehäuseteil 31 als auch der zweite Gehäuseteil 33 weisen jeweils mindestens einen in einer Umfangsfläche angeordneten Flansch 35, 37 auf, über welche im vorliegenden Ausführungsbeispiel eine Freiluftdurchführung 7 bzw. ein Kopplungs-Kapselungsgehäuse 41 mit dem Kapslungsgehäuse 3 verbunden sind. Dadurch, dass der erste Flansch 35 in der Umfangsfläche des ersten Gehäuseteils 31 und der zweite Flansch 37 in der Umfangsfläche des zweiten Gehäuseteils 33 angeordnet ist, kann durch ein Verdrehen der beiden Gehäuseteile gegeneinander ein Verdrehen der Freiluftdurchführung 7 gegenüber den Freiluftdurchführungen 7' herbeigeführt werden. Dadurch lässt sich trotz unterschiedlicher Baulängen der Freiluftdurchführungen mit und ohne Trenner/Erder erreichen, dass (bei horizontaler Gehäuselängsachse A) die Anschlussklemmenplatten 11 alle in derselben horizontalen Ebene E liegen.

Aufgrund der Rotationssymmetrie der Kontakte und Gegenkontakte der Kontaktanordnung 5 sowie des Löschsystems 29 ist ein Verdrehen der beiden Gehäuseteile 31, 33 gegeneinander möglich, ohne dass die Verdrehung durch die Kontaktanordnung 5 oder das Löschsystem 29 behindert wird. Die Verdrehung der beiden Gehäusehälften 31, 33 gegeneinander kann dabei grundsätzlich um jeden Winkel zwischen 0 und 360° erfolgen.

Durch Drehung des einen Gehäuseteils gegenüber dem anderen Gehäuseteil um 180°, wie dies in der Figur dargestellt ist, ist eine platzsparende Ausführung der Bausteine möglich. Andere Bauformen lassen sich durch Drehung um beliebige Winkel (beispielsweise 90°) erzeugen, sodass jederzeit eine bedarfsgerechte und platzsparende Bausteinanordnung realisiert werden kann.

Obwohl in dem dargestellten Ausführungsbeispiel die Kontakte und die Gegenkontakte um die Gehäuselängsachse A gegeneinander verdreht werden können, ist es auch möglich, den erfindungsgemäßen Leistungsschalter so auszugestalten, dass die Kontakte 19, 21 der Kontaktanordnung 5 gegenüber den Gegenkontakten 25, 27 nicht um die Gehäuselängsachse A verdreht werden können. In diesem Fall können die Kontaktpunkte 43, 45, an denen die Anschlussleiter 9 bzw. 15 mit dem Kontakt 19 bzw. dem Gegenkontakt in elektrisch leitendem Kontakt stehen, so ausgebildet sein, dass sie sich beim Verdrehen der beiden Gehäuseteile gegeneinander um die Außenflächen des Kontaktes bzw. des Gegenkontaktes herum drehen. Dies lässt sich beispielsweise durch Schleifkontakte erreichen.

Der erfindungsgemäße Leistungsschalter ermöglicht den Aufbau von Bausteinanordnungen, in denen alle Freiluftabgänge (Hochspannungsanschlüsse der Freiluftdurchführungen) trotz Einsatz zusätzlicher Elemente, wie etwa Trenner/Erder, auf gleicher Ebene liegen. Das führt beim Einsatz des erfindungsgemäßen Leistungsschalters im Rahmen eines Kompaktschaltmodules, wie es in der Figur dargestellt ist, zu einer optimal flachen Bauform, was Vorteile für den Anlagenbau, insbesondere für die Sammelschienenhöhe und die Abgangshöhe, hat.

Das geerdete Kopplungsgehäuse 3 kann insbesondere als sogenanntes "Dead Tank-Gehäuse" realisiert sein, in dem sich ein Isoliergas bzw. Löschgas unter einem Druck von einigen Bar befindet bzw. in das ein derartiges Isolier- bzw. Löschgas unter einem hohen Druck eingeblasen werden kann.

## Patentansprüche

1. Leistungsschalter (1) mit einem Gehäuse (3), welches eine Gehäuselängsachse (A) aufweist, einer im Gehäuse angeordneten Kontaktanordnung (5), die mit einem ersten durch das Gehäuse (3) geführten elektrischen Leiter (9) und einem zweiten durch das Gehäuse geführten elektrischen Leiter (15) in leitender Verbindung steht,
**dadurch gekennzeichnet, dass**
- das Gehäuse (3) einen ersten Gehäuseteil (31) und ein zweiten Gehäuseteil (33) umfasst, wobei der erste elektrische Leiter (9) durch den ersten Gehäuseteil (31) geführt ist, der zweite elektrische Leiter (15) durch den zweiten Gehäuseteil (33) geführt ist und die beiden Gehäuseteile (31, 33) um die Gehäuselängsachse (A) gegeneinander verdrehbar miteinander verbunden sind.

2. Leistungsschalter (1) nach Anspruch 1,
**dadurch gekennzeichnet, dass**
die Kontaktanordnung (5) wenigstens einen Kontakt (19, 21) und wenigstens einen Gegenkontakt (25, 27) umfasst, die derart ausgestaltet und relativ zueinander angeordnet sind, dass sie sich um die Gehäuselängsachse (A) gegeneinander verdrehen lassen und dass der erste elektrische Leiter (9) mit dem Kontakt (19, 21) und der zweite elektrische Leiter (15) mit dem Gegenkontakt (25, 27) elektrisch leitend verbunden ist.

3. Leistungsschalter (1) nach Anspruch 2,
**dadurch gekennzeichnet, dass**
der Kontakt (19, 21) und der Gegenkontakt (25, 27) Rotationssymmetrie bezüglich der Gehäuselängsachse (A) aufweisen und der eine den anderen bei einer eine Einschaltstellung repräsentierenden Kontaktstellung wenigstens teilweise konzentrisch umgibt.

4. Leistungsschalter (1) nach Anspruch 3,
**dadurch gekennzeichnet, dass**
die Kontaktanordnung (5) eine Nennstromkontaktanordnung mit einem Nennstromkontakt (19) und einem Nennstromgegenkontakt (25) sowie eine Lichtbogenkontaktanordnung mit einem Lichtbogenkontakt (21) und einem Lichtbogengegenkontakt (27) umfasst, wobei der Nennstromkontakt (19) und der Lichtbogenkontakt (21) Rotationssymmetrie bezüglich der Gehäuselängsachse (A) aufweisen und der eine den anderen konzentrisch umgibt und wobei der Nennstromgegenkontakt (25) und der Lichtbogengegenkontakt (27) Rotationssymmetrie bezüglich der Gehäuselängsachse A aufweisen und der eine den anderen konzentrisch umgibt.

5. Leistungsschalter (1) nach einem der Ansprüche 2 bis 4,
**dadurch gekennzeichnet, dass**
die Kontaktanordnung (5) derart ausgestaltet und angeordnet ist, dass sich ein Kontaktschluss bzw. eine Kontakttrennung durch axiales Verschieben des Kontaktes (19, 21) und/oder des Gegenkontaktes (25, 27) entlang der Gehäuselängsachse (A) herbeiführen lässt.

6. Leistungsschalter (1) nach Anspruch 1,
**dadurch gekennzeichnet, dass**
wenigstens einer der elektrischen Leiter (9, 15) elektrisch derart mit der Kontaktanordnung (5) verbunden ist, dass er bei einer Verdrehung der beiden Gehäuseteile (31, 33) gegeneinander um die Kontaktanordnung (5) herum gedreht werden kann.

7. Leistungsschalter (1) nach einem der Ansprüche 1 bis 6,
**dadurch gekennzeichnet, dass**
das Gehäuse (3) eine geerdete Metallkapsel bildet und die Kontaktanordnung ein Löschsystem (29) zum Löschen eines Lichtbogens umfasst.

8. Leistungsschalter (1) nach Anspruch 7,
**dadurch gekennzeichnet, dass**
das Löschsystem (29) Rotationssymmetrie bezüglich der Gehäuselängsachse (A) aufweist.

9. Leistungsschalter (1) nach einem der Ansprüche 1 bis 8,
**dadurch gekennzeichnet, dass**
jeder Gehäuseteil (31, 33) wenigstens einen Flansch (35, 37) zum Anflanschen weiterer Gehäuseteile (7, 41) umfasst und der erste elektrische Leiter (9) und der zweite elektrische Leiter (15) jeweils durch einen Flansch (35, 37) geführt sind.

10. Leistungsschalter (1) nach Anspruch 9,
**dadurch gekennzeichnet, dass**
die Flansche (35, 37) in einer Umfangsfläche des Gehäuses angeordnet sind.

## Claims

1. Heavy-duty circuit breaker (1) with a housing (3) which has a longitudinal housing axis (A), a contact arrangement (5) arranged in the housing, which is conductively connected to a first electrical lead (9) fed through the housing (3) and a second electrical lead (15) fed through the housing, **characterized in that**
- the housing (3) comprises a first housing part (31) and a second housing part (33), wherein the first electrical lead (9) is fed through the first housing part (31), the second electrical lead (15) is fed through the second housing part (33) and the two housing parts (31, 33) are connected to one another so as to be rotatable with respect to one another about the longitudinal housing axis (A).

2. Heavy-duty circuit breaker (1) according to Claim 1, **characterized in that** the contact arrangement (5) comprises at least one contact (19, 21) and at least one countercontact (25, 27) which are designed and arranged relative to one another in such a manner that they can be rotated with respect to one another about the longitudinal housing axis (A) and that the first electrical lead (9) is electrically conductively connected to the contact (19, 21) and the second electrical lead (15) is electrically conductively connected to the countercontact (25, 27).

3. Heavy-duty circuit breaker (1) according to Claim 2, **characterized in that** the contact (19, 21) and the countercontact (25, 27) exhibit rotational symmetry with respect to the longitudinal housing axis (A) and one surrounds the other one at least partially concentrically at a contact position representing an on position.

4. Heavy-duty circuit breaker (1) according to Claim 3, **characterized in that** the contact arrangement (5) comprises a rated-current contact arrangement with a rated-current contact (19) and a rated-current countercontact (25) and an arcing contact arrangement with an arcing contact (21) and an arcing countercontact (27), wherein the rated-current contact (19) and the arcing contact (21) exhibit rotational symmetry with respect to the longitudinal housing axis (A) and one surrounds the other one concentrically and wherein the rated-current countercontact (25) and the arcing countercontact (27) exhibit rotational symmetry with respect to the longitudinal housing axis A and one surrounds the other one concentrically.

5. Heavy-duty circuit breaker (1) according to one of Claims 2 to 4, **characterized in that** the contact arrangement (5) is designed and arranged in such a manner that a contact closure or a contact separation can be produced by axially displacing the contact (19, 21) and/or the countercontact (25, 27) along the longitudinal housing axis (A).

6. Heavy-duty circuit breaker (1) according to Claim 1, **characterized in that** at least one of the electrical leads (9, 15) is electrically connected to the contact arrangement (5) in such a manner that it can be rotated about the contact arrangement (5) during a rotation of the two housing parts (31, 33) with respect to one another.

7. Heavy-duty circuit breaker (1) according to one of Claims 1 to 6, **characterized in that** the housing (3) forms a grounded metal capsule and the contact arrangement comprises an extinguishing system (29) for extinguishing an arc.

8. Heavy-duty circuit breaker (1) according to Claim 7, **characterized in that** the extinguishing system (29) exhibits rotational symmetry with respect to the longitudinal housing axis (A).

9. Heavy-duty circuit breaker (1) according to one of Claims 1 to 8, **characterized in that** each housing part (31, 33) comprises at least one flange (35, 37) for flanging on further housing parts (7, 41) and the first electrical lead (9) and the second electrical lead (15) are in each case fed through a flange (35, 37).

10. Heavy-duty circuit breaker (1) according to Claim 9, **characterized in that** the flanges (35, 37) are arranged in one circumferential plane of the housing.

## Revendications

1. Disjoncteur ( 1 ) comprenant un boîtier ( 3 ) qui a un axe ( A ) longitudinal, un dispositif ( 5 ) de contact qui est disposé dans le boîtier et qui est en liaison conductrice avec un premier conducteur ( 9 ) électrique passant dans le boîtier ( 3 ) et avec un deuxième conducteur ( 15 ) électrique passant dans le boîtier,
**caractérisé en ce que**
- le boîtier ( 3 ) comprend une première partie ( 31 ) de boîtier et une deuxième partie ( 33 ) de boîtier, le premier conducteur ( 9 ) électrique passant dans la première partie ( 31 ) de boîtier, le deuxième conducteur ( 15 ) électrique passant dans la deuxième partie ( 33 ) de boîtier et les deux parties ( 31, 33 ) de boîtier étant reliées l'une à l'autre de manière à pouvoir tourner l'une par rapport à l'autre autour de l'axe ( A ) longitudinal du boîtier.

2. Disjoncteur ( 1 ) suivant la revendication 1,
**caractérisé en ce que**
le dispositif ( 5 ) de contact comprend au moins un contact ( 19, 21 ) et au moins un contre-contact ( 25, 27 ) qui sont conformés et disposés l'un par rapport à l'autre de manière à pouvoir tourner l'un par rapport à l'autre autour de l'axe ( A ) longitudinal du boîtier et de manière à ce que le premier conducteur ( 9 ) électrique soit relié d'une manière conductrice de l'électricité au contact ( 19, 21 ) et le deuxième conducteur ( 15 ) électrique soit relié d'une manière conductrice de l'électricité au contre-contact ( 25, 27 ).

3. Disjoncteur ( 1 ) suivant la revendication 2,
**caractérisé en ce que**
le contact ( 19, 21 ) et le contre-contact ( 25, 27 ) ont une symétrie de révolution par rapport à l'axe ( A ) longitudinal du boîtier et l'un entoure concentriquement au moins en partie l'autre dans une position de contact représentant une position de fermeture du circuit.

4. Disjoncteur ( 1 ) suivant la revendication 3,
**caractérisé en ce que**
le dispositif ( 5 ) de contact comprend un dispositif de contact de courant nominal ayant un contact ( 19 ) de courant nominal et un contre-contact ( 25 ) de courant nominal, ainsi qu'un dispositif de contact d'arc électrique ayant un contact ( 21 ) d'arc électrique et un contre-contact ( 27 ) d'arc électrique, le contact ( 19 ) de courant nominal et le contact ( 21 ) d'arc électrique ayant une symétrie de révolution par rapport à l'axe ( A ) longitudinal du boîtier et l'un entourant concentriquement l'autre et dans lequel le contre-contact ( 25 ) de courant nominal et le contre-contact ( 27 ) d'arc électrique ont une symétrie de révolution par rapport à l'axe ( A ) longitudinal du boîtier et l'un entoure concentriquement l'autre.

5. Disjoncteur ( 1 ) suivant l'une des revendications 2 à 4,
**caractérisé en ce que**
le dispositif ( 5 ) de contact est conformé et disposé de manière à ce qu'une borne de contact ou une séparation de contact puisse être provoquée par un déplacement axial du contact ( 19, 21 ) et/ou du contre-contact ( 25, 27 ) le long de l'axe ( A ) longitudinal du boîtier.

6. Disjoncteur ( 1 ) suivant la revendication 1,
**caractérisé en ce qu'**au moins l'un des conducteurs ( 9, 15 ) électriques est relié électriquement au dispositif ( 5 ) de contact de manière à pouvoir tourner autour du dispositif ( 5 ) de contact lors d'une rotation des deux parties ( 31, 33 ) du boîtier l'une par rapport à l'autre.

7. Disjoncteur ( 1 ) suivant l'une des revendications 1 à 6,
**caractérisé en ce que**
le boîtier ( 3 ) forme un encapsulage métallique mis à la terre et le dispositif de contact comprend un système ( 29 ) d'extinction pour éteindre un arc électrique.

8. Disjoncteur ( 1 ) suivant la revendication 7,
**caractérisé en ce que**
le système ( 29 ) d'extinction a une symétrie de révolution par rapport à l'axe ( A ) longitudinal du boîtier.

9. Disjoncteur ( 1 ) suivant l'une des revendications 1 à 8,
**caractérisé en ce que**
chaque partie ( 31, 33 ) du boîtier comprend au moins une bride ( 35, 37 ) pour le bridage d'autres parties ( 7, 41 ) du boîtier et le premier conducteur ( 9 ) électrique et le deuxième conducteur ( 15 ) électrique sont guidés respectivement par une bride ( 35, 37 ).

10. Disjoncteur ( 1 ) suivant la revendication 9,
**caractérisé en ce que**
les brides ( 35, 37 ) sont disposées dans une surface de pourtour du boîtier.
